# EUROPEAN PATENT APPLICATION

(11) **EP 1 624 599 A2**
(43) Date of publication of application: **08.02.2006**
(21) Application number: 05011372.9
(22) Date of filing: 25.05.2005
(51) Int. Cl.: H04H 1/00

(54) **Digital broadcast system and method using a digital broadcast signal containing location information**

(30) Priority: 02.08.2004 KR 2004060882
(71) Applicant: SAMSUNG ELECTRONICS CO., LTD., Suwon-si, Gyeonggi-do (KR)
(72) Inventor: Kim, Sung-Dong, Yeongtong-gu Suwon-si Gyeonggi-do (KR); Yang, Sung-Chul, Yeongtong-gu Suwon-si Gyeonggi-do (KR)
(74) Representative: Grünecker, Kinkeldey, Stockmair & Schwanhäusser Anwaltssozietät

(57) **Abstract**

A digital broadcast system and method including a user input unit, a digital broadcast signal receiver for receiving a digital broadcast signal including location information, a location information detector for detecting the location information from the receiver, and an output unit for outputting the received signal. The location information is used to provide various location-related services to the user. If the user requests route guidance to a predetermined place appearing in the broadcast scene, the user can receive route guidance to the predetermined place. When a place, details of which the user desires to know, appears in a scene of a digital broadcast that the user is watching through the digital broadcast receiver, the user can confirm the details of the place using the location information included in the received signal.

## Description

The present invention relates generally to a digital broadcast system, and more particularly to a digital broadcast system and method using a digital broadcast signal containing location information.

Digital broadcasting provides a broadcast service with high image and sound quality to users, replacing conventional analog broadcasting.

Recently, a digital broadcast service, which enables the user to watch digital broadcasts even while the user is in motion, has drawn increasing attention, along with the development of digital broadcasting and mobile communication technologies. In particular, there is growing interest in Digital Multimedia Broadcasting (DMB) services using mobile communication terminals. The DMB services enable the user to watch various multimedia broadcasts over a number of channels by means of an in-vehicle receiver or a personal portable receiver equipped with an omnidirectional receiving antenna.

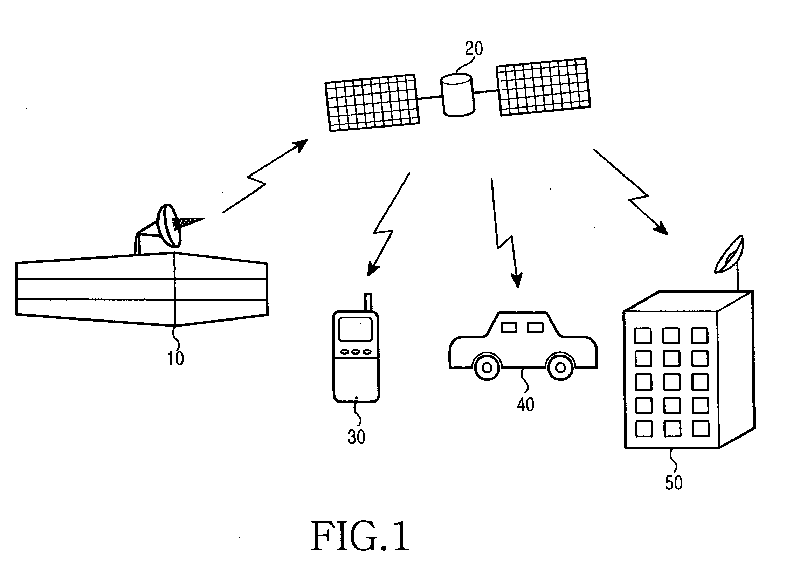

Fig. 1 illustrates a conventional system for providing digital broadcasting services. As illustrated in Fig. 1, the system includes a data transmission center 10, a satellite 20, and receivers, such as a mobile communication terminal 30, an in-vehicle receiver 40, and a residence receiver 50. The data transmission center 10 compresses and modulates digital multimedia broadcast data (e.g., image, audio, and data signals), and transmits it to the satellite 20. The satellite 20 receives the signal transmitted from the data transmission center 10, and transmits the signal back to the ground, after amplification and frequency conversion.

The receivers 30, 40, and 50 receive the signal transmitted from the satellite 20 and then demodulate and decompress the received signal for conversion back to the original signal.

Due to rapid development of the digital broadcasting technology, users can now view clean and noise-free digital broadcasts even in a vehicle that is in motion at a high speed.

Additionally, if the user desires to visit a place appearing in a scene of a digital broadcast that they are watching or if the user desires to obtain information about the place (for example, a store being advertised in a commercial), the user must find some way to obtain information about the location of this place on their own.

Therefore, the present invention has been designed in view of the above described circumstances.

It is the object of the present invention to provide a system and method using location information included in a digital broadcast signal received by a digital broadcast receiver.

This object is solved by the subject matter of the independent claims.

Preferred embodiments are defined by the subject matter of the dependent claims.

It is an aspect of the present invention to provide a system and method for providing an optimal route to a place, to which the user desires to go, when the place appears in a scene of a digital broadcast that the user is watching through a digital broadcast receiver, or for storing information about the place to use the information at a later time.

It is another aspect of the present invention to provide a system and method for enabling the user to obtain the information of a place, details of which the user desires to know, using location information included in a digital broadcast signal received by a digital broadcast receiver when the place appears in a scene of a digital broadcast that the user is watching through the digital broadcast receiver.

In accordance with one aspect of the present invention, the above can be accomplished by a digital broadcast system including a user input unit for receiving a user manipulation signal; a digital broadcast signal receiver for receiving a digital broadcast signal including location information; a location information detector for detecting the location information, included in the digital broadcast signal, from the digital broadcast signal receiver; an output unit for outputting the received digital broadcast signal; and a system controller for controlling an overall operation of the digital broadcast system.

In accordance with another aspect of the present invention, there is provided a method for receiving location information through digital broadcasting. The method includes receiving and outputting a digital broadcast signal including location information, detecting that the location information is included in the digital broadcast signal, and detecting the location information from the digital broadcast signal.

In accordance with still another aspect of the present invention, there is provided a digital broadcast receiver including a user input unit for receiving a user manipulation signal; a data receiver for receiving a digital broadcast signal including location information; an external device interface unit for transferring the location information to an external device when receiving a request for the location information from the external device; and a controller for controlling functions of the external device interface unit in response to the user manipulation signal.

In accordance with yet another aspect of the present invention, there is provided a navigation terminal for performing a route guidance function. The terminal includes a user input unit for receiving a user manipulation signal, a current location detector for detecting a current location of the navigation terminal, an external device interface unit for receiving location information from an external digital broadcast receiver receiving a digital broadcast signal including the location information, a route determinator for calculating a route based on the location information received by the external device interface unit, and a controller for controlling the current location detector, the route determinator, and the external device interface unit to request, via the external device interface unit. The digital broadcast receiver transmits the location information, upon receipt of a request for the location information input through the user input unit, in order to perform route guidance based on the location information.

The above object and other aspects, features, and advantages of the present invention will be more clearly understood from the following detailed description taken in conjunction with the accompanying drawings, in which:
Fig. 1 illustrates a conventional system for providing digital broadcasting services;
Fig. 2 is a block diagram illustrating a digital broadcast system according to an embodiment of the present invention;
Fig. 3 is a diagram illustrating a navigation system including a digital broadcast receiver and a navigation terminal according to an embodiment of the present invention;
Figs. 4A and 4B are diagrams illustrating configurations of the navigation system including the digital broadcast receiver and the navigation terminal according to an embodiment of the present invention;
Fig. 5 is a block diagram illustrating a digital broadcast receiver according to an embodiment of the present invention;
Fig. 6 is a block diagram illustrating a navigation terminal according to an embodiment of the present invention;
Fig. 7 is a flow chart illustrating a route guidance method of an all-in-one navigation system, into which a digital broadcast receiver and a navigation terminal are integrated, according to an embodiment of the present invention;
Figs. 8A and 8B are diagrams illustrating methods for incorporating location information into a digital broadcast signal;
Fig. 9 is a flow chart illustrating how a navigation system according to an embodiment of the present invention conducts route guidance when a route guidance request associated with location information included in a digital broadcast signal is made in a navigation terminal; and
Fig. 10 is a flow chart illustrating how a navigation system according to an embodiment of the present invention conducts route guidance when a route guidance request associated with location information included in a digital broadcast signal is made in a digital broadcast receiver.

Preferred embodiments of the present invention will be described in detail herein below with reference to the annexed drawings. In the drawings, the same or similar elements are denoted by the same reference numerals even though they are depicted in different drawings. Additionally, in the following description, a detailed description of known functions and configurations incorporated herein will be omitted when it may obscure the subject matter of the present invention.

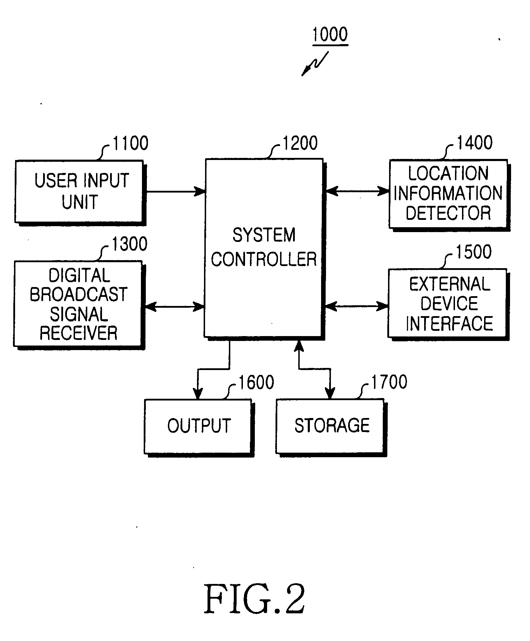

Fig. 2 is a block diagram illustrating a digital broadcast system according to an embodiment of the present invention. As illustrated in Fig. 2, the digital broadcast system 1000 includes a user input unit 1100, a system controller 1200, a digital broadcast signal receiver 1300, a location information detector 1400, an external device interface unit 1500, an output unit 1600, and a storage unit 1700. The user input unit 1100 receives a user manipulation signal such as a key input signal or a voice input signal, and transfers it to the system controller 1200. The system controller 1200 controls the overall operation of the digital broadcast system 1000. The digital broadcast signal receiver 1300 receives a digital broadcast signal containing location information and outputs it to the output unit 1500. The location information preferably includes a Point of Interest (POI), i.e., a name corresponding to a predetermined location, a variety of information relating to the predetermined location, information for connection to a database providing the information, and location coordinates thereof. The location information must be associated with the digital broadcast data signal.

For example, when a movie is broadcast through digital broadcasting, location information associated with each scene is additionally provided. The location information may be optionally provided by a service provider that produces and provides digital broadcasts.

The digital broadcast signal receiver 1300 outputs the digital broadcast signal, together with an indicator for indicating the presence of the location information in the digital broadcast signal, through the output unit 1500. When receiving a request for the location information through the user input unit 1100, the location information detector 1400 detects the location information from the digital broadcast signal receiver 1300.

The external device interface unit 1500 enables communication with an external device (not shown) connectable to the digital broadcast system 1000, and transmits the location information detected by the location information detector 1400 to the external device. The external device includes, for example, a mobile communication terminal, a wireless Internet device, or a navigation device. When receiving a request for the location information from the external device, the external device interface unit 1500 provides the location information to the external device under the control of the system controller 1200.

The output unit 1500 can be, for example, a Liquid Crystal Display (LCD) to output various display data generated in the digital broadcast system 1000. Under the control of the system controller 1200, the output unit 1500 displays the digital broadcast data, together with the indicator of the presence of the location information in the digital broadcast signal.

The storage unit 1600 stores the detected location information under the control of the system controller 1200. Instead of being stored in the storage unit 1600, the location information can be detected directly from the digital broadcast data at the request of the user. However, if a number of places are shown in a digital broadcast program, it is difficult for the user to differentiate the places and select a desired place from among them. Accordingly, the storage unit 1600 may sequentially store the location information of the places, such that the location information is used at a later time at the request of the user.

As described above with reference to Fig. 2, the location information detected from the digital broadcast signal receiver 1300 by the location information detector 1400 can be transferred to the external device. This embodiment will be described with reference to a navigation device (also referred to as a navigation terminal) as an external device that utilizes the location information most efficiently among various external devices connectable to the digital broadcast system 1000.

The digital broadcast system 1000 may be embodied as a digital broadcast receiver. The broadcast receiver and the navigation terminal may be integrated into a single unit (for example, an all-in-one unit) or may also be provided independently. When the broadcast receiver and the navigation terminal are provided independently, the user input unit 1100 is preferably provided in each of the broadcast receiver and the navigation terminal.

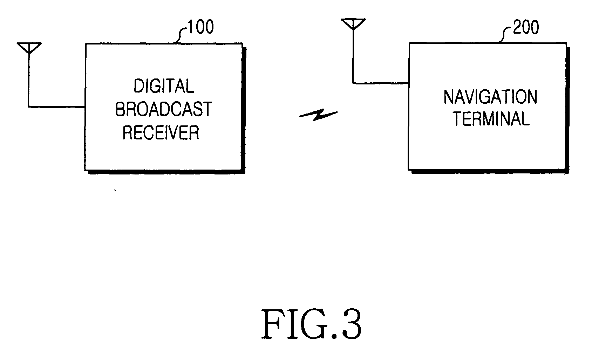

Fig. 3 illustrates a navigation system including a digital broadcast receiver and a navigation terminal according to an embodiment of the present invention. As illustrated in Fig. 3, the navigation system according to the present invention includes a digital broadcast receiver 100 capable of receiving satellite or terrestrial digital broadcast signals and a navigation terminal 200 that provides route guidance to a destination desired by the user.

The navigation terminal 200 determines a route from a departure location set by the user to a destination and provides route guidance to the user using the determined route. For example, the navigation terminal 200 transmits information of the current location (for example, the departure location) and the destination to a route calculation service (not shown), which is connected with the navigation terminal 200 via a wired or wireless network, and receives information of an optimal route calculated by the route calculation server, and then provides route guidance using the optimal route. Alternatively, the navigation terminal 200 itself may calculate the optimal route to provide route guidance.

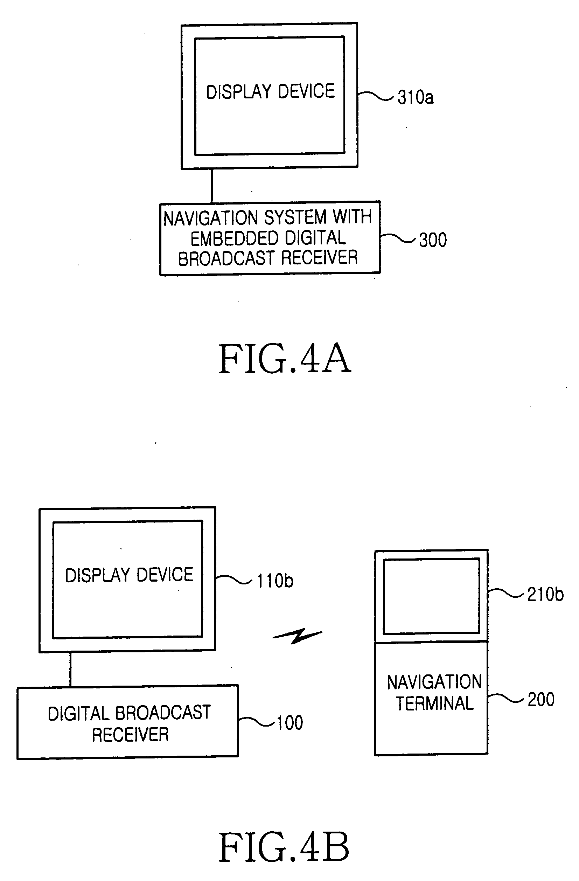

The digital broadcast receiver 100 and the navigation terminal 200 can transmit and receive data wirelessly or by wire to and from each other to provide route guidance to the destination desired by the user. The digital broadcast receiver 100 and the navigation terminal 200 can be configured as illustrated in Figs. 4A and 4B.

Figs. 4A and 4B are diagrams illustrating configurations of the navigation system including the digital broadcast receiver and the navigation terminal according to an embodiment of the present invention. More specifically, Fig. 4A illustrates an all-in-one navigation system 300 into which the digital broadcast receiver 100 and the navigation terminal 200 are integrated. As illustrated in Fig. 4A, a single display unit 310a may be provided to display digital broadcasts and route guidance information.

Alternatively, as illustrated in Fig. 4B, two separate display units 110b and 210b may be provided to display the digital broadcasts and the route guidance information, respectively. More specifically, Fig. 4B illustrates a navigation system 300 in which a digital broadcast receiver 100 and a navigation terminal 200 are provided independently as in the navigation system illustrated in Fig. 3. In the navigation system, the digital broadcast receiver 100 and the navigation terminal 200 may be configured such that they can be detachably coupled to each other.

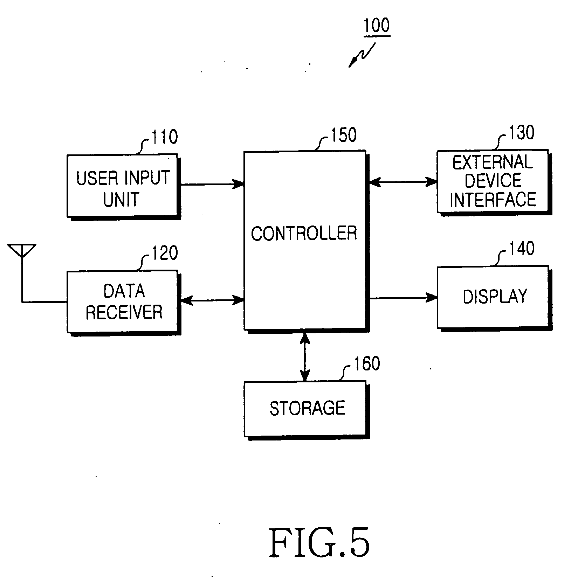

Fig. 5 is a block diagram showing a digital broadcast receiver according to an embodiment of the present invention. Referring to Fig. 5, the digital broadcast receiver 100 receives digital broadcast data containing location information and transmits the location information to an external device (for example, a navigation terminal), when receiving a request for the location information from the external device. To accomplish this, the digital broadcast receiver 100 preferably includes a user input unit 110, a data receiver 120, an external device interface unit 130, a display unit 140, a controller 150, and a storage unit 160. The user input unit 110 receives a user manipulation signal and transfers it to the controller 150. The data receiver 120 receives digital broadcast data containing location information. A description of the location information is omitted herein because it has already been described above with reference to Fig. 2.

When receiving a request for the location information from an external device (for example, a navigation terminal), the external device interface unit 130 transfers the location information to the external device. The display unit 140 outputs the digital broadcast data, together with an indicator for indicating the presence of the location information in the digital broadcast data, under the control of the controller 150. The controller 150 controls the overall operation of the digital broadcast receiver 100 according to the embodiment of the present invention. In response to a user manipulation signal received through the user input unit 110, the controller 150 controls functions of the external device interface unit 130.

Additionally, the storage unit 160 stores the received location information under the control of the controller 150.

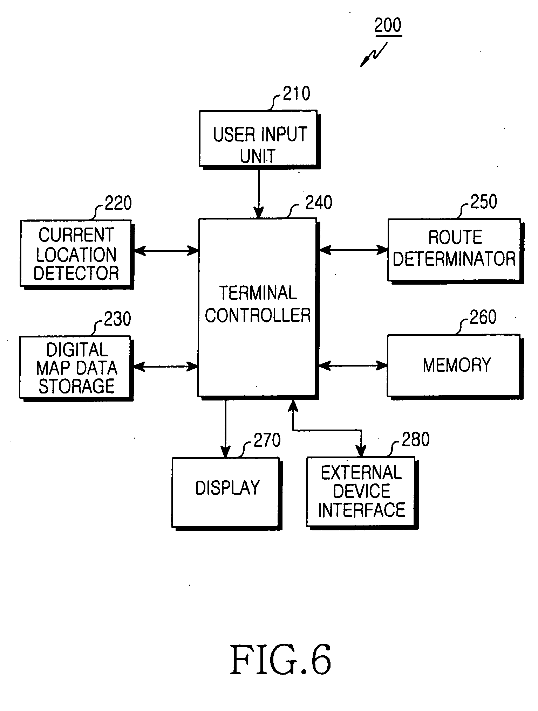

Fig. 6 is a block diagram illustrating a navigation terminal according to an embodiment of the present invention. As illustrated in Fig. 6, the navigation terminal 200 includes a user input unit 210, a current location detector 220, a digital map data storage unit 230, a terminal controller 240, a route determinator 250, a memory 260, a display unit 270, and an external device interface unit 280. The user input unit 210 preferably includes various function keys, number keys, and special keys to enable the user to input a departure location or to request location information included in the digital broadcast signal received by the digital broadcast receiver 100. The user input unit 210 outputs a user manipulation signal to the terminal controller 240. The user input unit 210 may also include a separate key for requesting the location information included in the digital broadcast signal.

If it is possible to perform a user input function of the navigation terminal 200 through the user interface unit 110 of the digital broadcast receiver 100 or if the digital broadcast receiver 100 and the navigation terminal 200 are integrated into a single unit, the user input unit 110 in the digital broadcast receiver 100 may be used to perform the user input function of the navigation terminal 200, instead of providing the user input unit 210 in the navigation terminal 200.

The current location detector 220 preferably includes a built-in GPS receiver (not shown) for receiving a GPS signal, and preferably uses the GPS signal received through the GPS receiver to detect the current location of the navigation terminal 200 to set the departure location.

The digital map data storage unit 230 stores digital map data corresponding to a digital map produced for each unit region. The digital map data is preferably used to output the route calculated by the route determinator 250 as graphical information.

The terminal controller 240 controls the overall operation of the navigation terminal 200. More specifically, when the user requests the location information included in the received digital broadcast signal through the user input unit 210, the terminal controller 240 controls the navigation terminal 200 to request transmission of the location information from the digital broadcast receiver 100 through the external device interface unit 280. The external device interface unit 280 according to the embodiment of the present invention is connected with the external device interface unit 1500 of the digital broadcast receiver 100, and connects the navigation terminal 200 with the digital broadcast receiver 100.

When receiving the location information from the digital broadcast receiver 100 through the external device interface unit 280, the terminal controller 240 sets the received location information as the destination location, and sets the current location of the navigation terminal 200 detected by the location information detector 220 as the departure location, and then transfers the set locations to the route determinator 250.

The terminal controller 240 performs route guidance from the current location to the destination location, which is determined by the route determinator 250. The terminal controller 240 may perform voice route guidance using the determined route through a speaker (not shown).

Using a previously stored route calculation algorithm, the route determinator 250 calculates a route from a departure location corresponding to the current location of the navigation terminal 200 to a destination location corresponding to the location information received from the digital broadcast receiver 100.

The memory 260 stores various information required to control the operation of the navigation terminal 200. More specifically, the memory 260 stores the location information received through the external device interface unit 280 under the control of the terminal controller 240. When the user makes a route guidance request, the location information stored in the memory 260 is detected by the terminal controller 240, which is then transferred to the route determinator 250.

As indicated above, the display unit 270 can be, for example, an LCD to output various display data generated in the navigation terminal 200. The display unit 270 displays the route determined by the route determinator 250 under the control of the terminal controller 240.

The navigation terminal 200 may further include a communication module for transmitting the current location of the navigation terminal 200 and the location information received from the digital broadcast receiver 100 to an external route calculation server (not shown) and for receiving information of a route calculated by the external route calculation server therefrom.

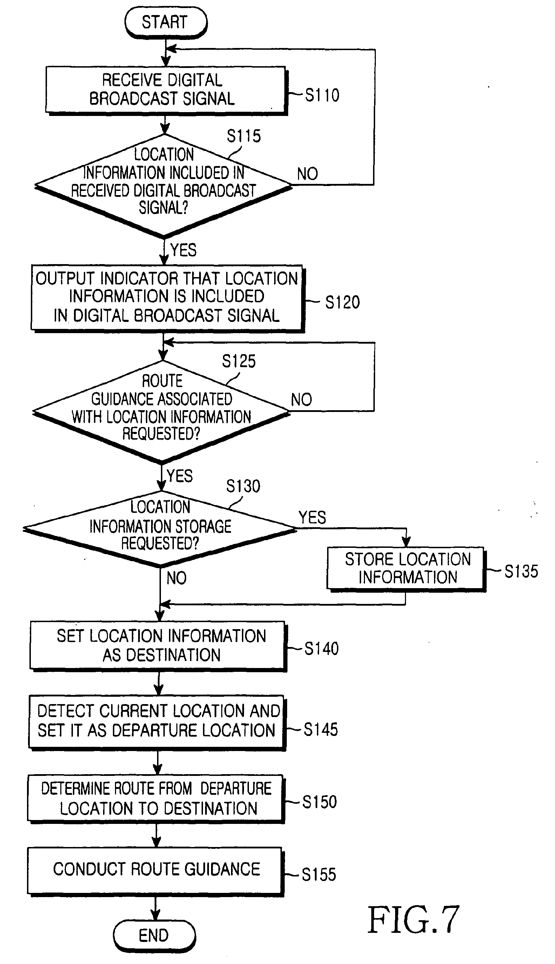

Fig. 7 is a flow chart illustrating a route guidance method of an all-in-one navigation system, into which a digital broadcast receiver and a navigation terminal are integrated, according to an embodiment of the present invention. The navigation system may include a single display unit and may also include both the display unit 140 for displaying the digital broadcast data containing the location information received by the digital broadcast receiver 100 and the display unit 270 for displaying the various display data and the calculated route generated in the navigation terminal 200. The following description of Fig. 7 will be given under the assumption that the navigation system includes both the display units.

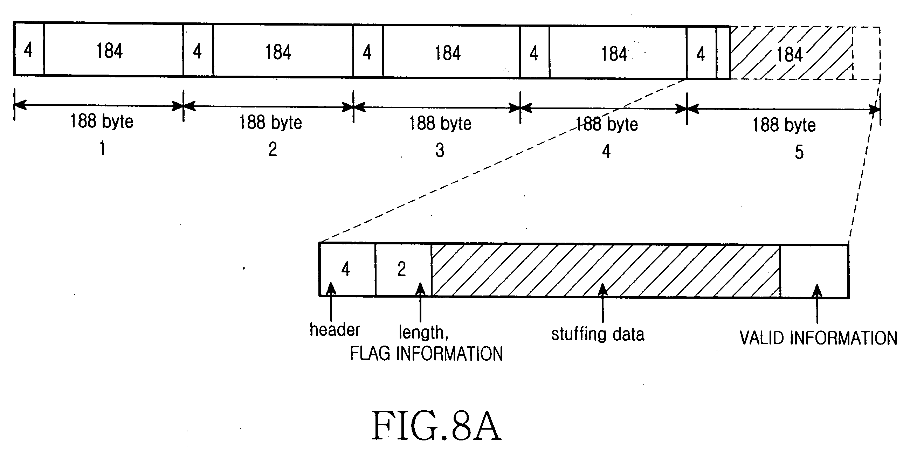

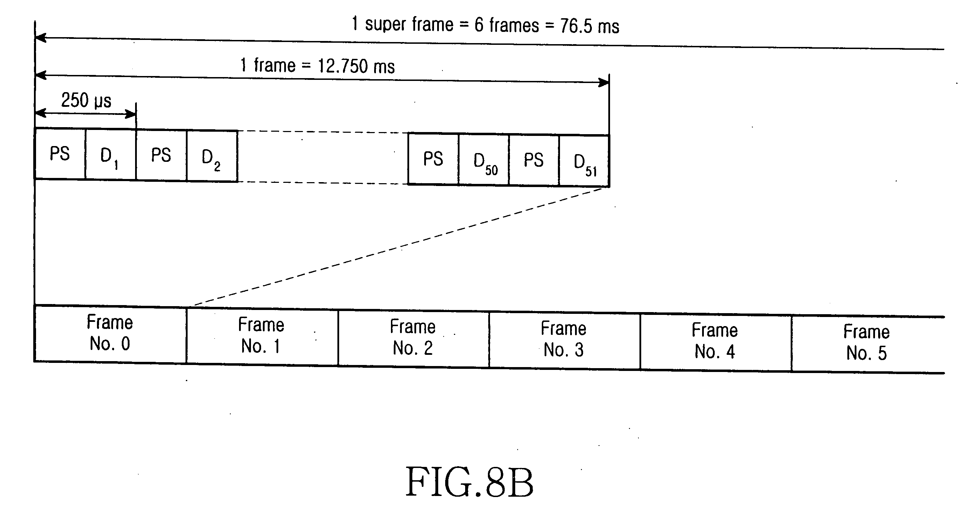

Referring to Figs. 2 to 7, the digital broadcast receiver 100 receives a digital broadcast signal at step S 110, and determines if location information, i.e., Point of Interest (POI), is included in the received digital broadcast signal at step S115. The location information is preferably location information of a place (for example, the primary setting of a drama or a store location that is advertised in a commercial) associated with the digital broadcast scene, and preferably includes location coordinates of a predetermined place and a location name thereof. A number of methods may be used to incorporate the location information into the digital broadcast signal, and an example method will be described later with reference to Figs. 8A and 8B.

If location information is included in the received digital broadcast signal, the digital broadcast receiver 100 outputs an indicator of the presence of the location information in the received signal at step S120.

The digital broadcast receiver 100 determines if it has received a route guidance request associated with the location information at step S125. The route guidance request can also be made in the navigation terminal 200.

At step S130, the digital broadcast receiver 100 determines if it is requested that the location information be stored, and transmits the location information to the navigation terminal 100.

When the location information is to be stored, the digital broadcast receiver 100 stores the location information at S135. Preferably, each time the user makes a route guidance request, the stored location information is detected to be used for the route guidance. The location information may also be stored in the navigation terminal 200.

At step S140, the navigation terminal 200 sets the location information as the destination location. The navigation terminal 200 detects the current location of the navigation terminal 200 and sets it as the departure location at S 145. Here, the navigation terminal 200 may also receive departure location information from the user and set it as the departure location.

Thereafter, the navigation terminal 200 determines a route from the set departure location to the set destination location at step S150. The navigation terminal 200 provides route guidance to the user using the determined route at step S155.

Alternatively, the navigation terminal 200 may terminate the procedure after performing step S150, and then may perform route guidance at a later time, such as when requested by the user.

A number of methods may be used to incorporate the location information into the digital broadcast signal. The following is a brief description of some example methods.

Figs. 8A and 8B are diagrams illustrating first and second methods for incorporating location information into a digital broadcast signal. More specifically, Fig. 8A illustrates the data format of a Motion Picture Expert Group 2-Transport Stream (MPEG2-TS) of a digital broadcast signal. Referring to Fig. 8A, the first method uses the MPEG2-TS to incorporate location information into the digital broadcast signal. The location information can be carried in the MPEG2-TS data, replacing an unused space (i.e., stuffing data) thereof. This is possible because the location information has a text file format consuming a small amount of data. A detailed description of the MPEG2-TS data is omitted herein because it is well known in the field of communications.

Fig. 8B illustrates a control channel frame of a digital broadcast signal in a satellite DMB or System-E method. As illustrated in Fig. 8B, the second method uses the control channel frame to incorporate location information into the digital broadcast signal. The location information can be carried in a 51 st data transport field D₅₁, which previously was always empty, in each control channel frame.

In another method for incorporating location information into the digital broadcast signal, the location information can be carried in a periodically shared channel (for example, an EPG channel) among digital broadcast channels.

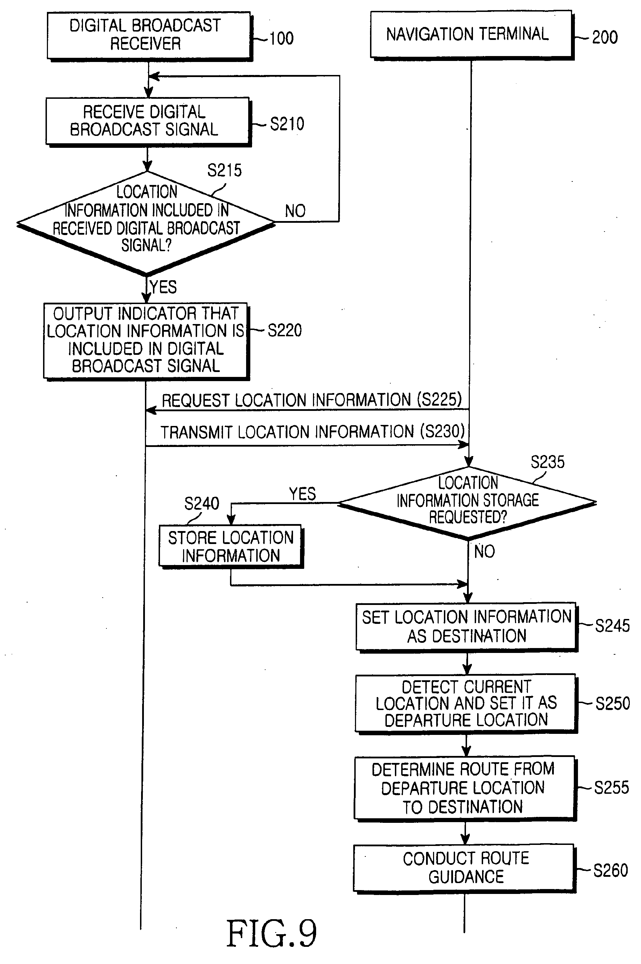

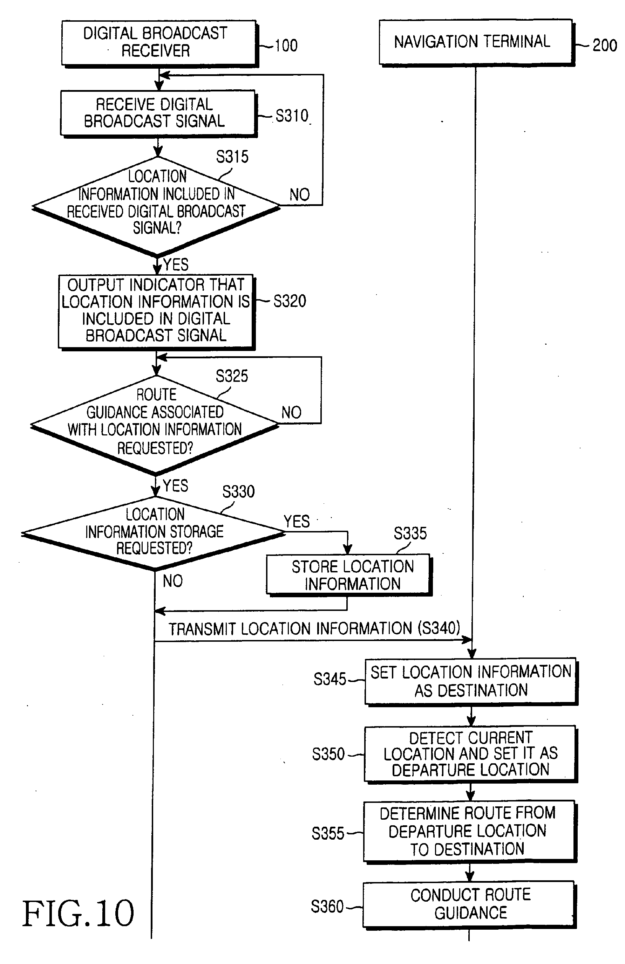

Fig. 9 is a flow chart illustrating how a navigation system according to an embodiment of the present invention conducts route guidance when a route guidance request associated with location information included in a digital broadcast signal is made in a navigation terminal. The navigation system of Fig. 9 and a navigation system, which will be described later with reference to Fig. 10, can each include a digital broadcast receiver 100 and a navigation terminal 200 that are provided independently or are detachably coupled to each other.

Referring to Fig. 9, the digital broadcast receiver 100 receives a digital broadcast signal at step S210, and determines if the received digital broadcast signal includes location information at step S215.

If the received digital broadcast signal includes location information, the digital broadcast receiver 100 outputs an indicator of the inclusion at step S220.

If the user makes a route guidance request, for example via voice or key inputs, after recognizing the indicator that indicates the inclusion of the location information, the navigation terminal 200 requests transmission of the location information from the digital broadcast receiver 100 at step S225. When receiving a route guidance request associated with the location information, the digital broadcast receiver 100 transmits the location information to the navigation terminal 200 at S230.

When receiving the location information from the digital broadcast receiver 100, the navigation terminal 200 determines if it is requested that the location information be stored at step S235. If it is requested through, for example, a user manipulation signal, that the location information be stored, the navigation terminal 200 stores the location information at step S240, and then sets the location information as the destination location at step S245. If it is not requested that the location information be stored at step S235, the navigation terminal 200 sets the location information as the destination location, without storing the location information, at step S245.

The navigation terminal 200 detects the current location of the navigation terminal 200 and sets it as the departure location at step S250. Here, the navigation terminal 200 may also receive departure location information from the user and set it as the departure location, for example, when the user desires to receive route guidance from a departure location other than the current location to the destination location.

The navigation terminal 200 determines a route from the set departure location to the set destination location at step S255, and conducts route guidance using the determined route at step S260.

Alternatively, the navigation terminal 200 may terminate the procedure after performing step S255, and then may perform route guidance at a later time as requested by the user, as described above with reference to Fig. 7.

Fig. 10 is a flow chart illustrating how a navigation system according to an embodiment of the present invention conducts route guidance when a route guidance request associated with location information included in a digital broadcast signal is made in a digital broadcast receiver. As illustrated in Fig. 10, the digital broadcast receiver 100 receives a digital broadcast signal at step S310, and determined if the received digital broadcast signal includes location information at step S315.

If the received digital broadcast signal includes location information, the digital broadcast receiver 100 outputs an indicator for indicating the inclusion at step S320.

The digital broadcast receiver 100 then determines if the user makes a route guidance request, for example via voice or key inputs, after recognizing the indicator of the inclusion of the location information at step S325.

If the route guidance request is made, the digital broadcast receiver 100 determines if it is requested that the location information be stored at step S330.

If it is requested through a user manipulation signal that the location information be stored at step S330, the digital broadcast receiver 100 stores the location information at step S335, and if it is not requested that the location information be stored at step S330, the digital broadcast receiver 100 transmits the location information to the navigation terminal 200, without storing the location information, at step S340.

When receiving the location information from the digital broadcast receiver 100, the navigation terminal 200 sets it as the destination location at step S345.

The navigation terminal 200 detects the current location of the navigation terminal 200 and sets it as the departure location at step S350. Here, the navigation terminal 200 may also receive departure location information from the user and set it as the departure location.

The navigation terminal 200 determines a route from the set departure location to the set destination location at step S355, and conducts route guidance using the determined route at step S360.

Alternatively, the navigation terminal 200 may terminate the procedure after performing step S355, and then may perform route guidance at a later time as requested by the user, as described above with reference to Fig. 7.

As is apparent from the description above, the present invention provides a system and method for using location information included in a digital broadcast signal received by a digital broadcast receiver, which has a number of features and advantages. For example, if the user requests route guidance to a predetermined place, to which the user desires to go, from among places appearing in the broadcast scenes, the user can easily receive various location-related services such as convenient route guidance to the predetermined place.

In addition, the user can store the location information of the predetermined place, to which the user has requested route guidance, such that the user may use the stored location information at a later time. This enables the user to receive route guidance to the predetermined place, whenever the user desires to go to the predetermined place.

Further, when a predetermined place, details of which the user desires to know, and to which the user desires to go, appears in a scene of a digital broadcast that the user is watching through a digital broadcast receiver, the user can confirm the details of the predetermined place using location information included in a digital broadcast signal received by the digital broadcast receiver.

The preferred embodiments of the present invention have been described above with reference to a navigation system as an embodiment capable of providing various location-related services using location information that is included in a digital broadcast signal received by a digital broadcast receiver and that is associated with a broadcast scene of the digital broadcast signal. However, the navigation system interworking with the digital broadcast receiver in such a manner is just an example, and various modifications are possible without departing from the scope of the invention.

For example, a digital broadcast system, in which a terminal capable of wireless Internet access is coupled to a digital broadcast receiver, can be implemented, such that location information included in a digital broadcast signal received by the digital broadcast receiver is used to search the Internet for information relating to a place corresponding to the location information.

Accordingly, the scope of the present invention should not be limited to the above-described embodiments, but should rather defined by the accompanying claims.

## Claims

1. A digital broadcast system comprising:
a user input unit for receiving a user manipulation signal;
a digital broadcast signal receiver for receiving a digital broadcast signal including location information;
a location information detector for detecting the location information included in the digital broadcast signal; and
an output unit for outputting the received digital broadcast signal.

2. The system according to claim 1, wherein the location information includes a name and coordinates corresponding to a predetermined location associated with a digital data broadcast.

3. The system according to claim 1 or 2, wherein the digital broadcast signal receiver outputs the digital broadcast signal including an indicator for indicating that the location information is included in the digital broadcast signal.

4. The system according to one of claims 1 to 3, wherein the location information detector detects and stores the location information included in the digital broadcast signal.

5. The system according to one of claims 1 to 4, further comprising an external device interface unit for transmitting the location information detected by the location information detector to an external device.

6. The system according to one of claims 1 to 5, further comprising a storage unit for storing the location information detected by the location information detector.

7. A method for receiving location information through digital broadcasting, the method comprising:
receiving a digital broadcast signal including location information;
detecting that the location information is included in the digital broadcast signal; and
detecting the location information from the digital broadcast signal.

8. The method according to claim 7, further comprising the step of transmitting the detected location information to an external device.

9. The method according to claim 7 or 8, wherein the location information includes a name and coordinates corresponding to a predetermined location.

10. The method according to one of claims 7 to 9, wherein the step of detecting that the location information is included in the digital broadcast signal comprises detecting an indicator included in the digital broadcast signal for indicating that the location information is included in the digital broadcast signal.

11. The method according to one of claims 7 to 10, further comprising the step of storing the location information included in the digital broadcast signal.

12. A digital broadcast receiver comprising:
a user input unit for receiving a user manipulation signal;
a data receiver for receiving a digital broadcast signal including location information; and
an external device interface unit for transferring the location information to an external device.

13. The receiver according to claim 12, wherein the location information includes a name and coordinates corresponding to a predetermined location.

14. The receiver according to claim 12 or 13, further comprising a storage unit for storing the received location information.

15. The receiver according to one of claims 12 to 14, further comprising a display unit for outputting the digital broadcast signal and an indicator for indicating that the location information is included in the digital broadcast signal.

16. The receiver according to one of claims 12 to 15, wherein the external device includes a navigation device for providing a route guidance service.

17. The receiver according to claim 16, wherein the digital broadcast receiver is configured such that the digital broadcast receiver can be detachably coupled to the navigation device.

18. A navigation terminal for performing a route guidance function, the terminal comprising:
a user input unit for receiving a user manipulation signal;
a current location detector for detecting a current location of the navigation terminal;
an external device interface unit for receiving location information from an external digital broadcast receiver receiving a digital broadcast signal including the location information; and
a route determinator for calculating a route based on the location information.

19. The terminal according to claim 18, wherein the location information includes a name and coordinates corresponding to a predetermined location.

20. The terminal according to claim 18 or 19, further comprising a memory for storing the received location information.

21. The terminal according to one of claims 18 to 20, further comprising a display unit for displaying the route calculated by the route determinator.

22. The terminal according to one of claims 18 to 21, further comprising a communication module for transmitting the current location of the navigation terminal and the received location information to an external route calculation server and for receiving information of a route from the current location to a destination corresponding to the location information, calculated by the external route calculation server, from the external route calculation server.

23. The terminal according to claim 22, wherein route guidance from the current location of the navigation terminal to the destination corresponding to the location information is performed using the information of the route received through the communication module.
